## Europäisches Patentamt

## European Patent Office

## Office européen des brevets

(11) Veröffentlichungsnummer: **0 073 748**
**B1**

(12) **EUROPÄISCHE PATENTSCHRIFT**

(45) Veröffentlichungstag der Patentschrift:
05.11.86

(21) Anmeldenummer: **82890120.7**

(22) Anmeldetag: **18.08.82**

(51) Int. Cl.⁴: **H 02 G 15/013,** H 02 G 15/113,
H 02 G 15/117

(54) Längsgeteilte druckfeste Kabelmuffe.

(30) Priorität: **20.08.81 AT 3644/81**
**18.12.81 AT 5451/81**

(43) Veröffentlichungstag der Anmeldung:
**09.03.83 Patentblatt 83/10**

(45) Bekanntmachung des Hinweises auf die Patenterteilung:
**05.11.86 Patentblatt 86/45**

(84) Benannte Vertragsstaaten:
**BE DE GB NL SE**

(56) Entgegenhaltungen:
**DE-A-2 308 414**
**DE-A-2 319 956**
**FR-A-1 147 778**
**FR-A-2 090 148**
**GB-A-378**
**US-A-2 771 502**
**US-A-3 337 681**

(73) Patentinhaber: **Felten & Guilleaume Fabrik
elektrischer Apparate Aktiengesellschaft
Schrems- Eugenia Niederösterreich, A-3943
Schrems- Eugenia (AT)**

(72) Erfinder: **Laha, Manfred, Grosse Stadtgutgasse 18,
A-1020 Wien II (AT)**

(74) Vertreter: **Beer, Otto, Dipl.- Ing., Patentanwälte
Dipl.- Ing. Otto Beer Dipl.- Ing. Manfred Beer
Lindengasse 8, A-1070 Wien (AT)**

## Beschreibung

Die Erfindung bezieht sich auf eine längsgeteilte, druckfeste Muffe, insbesondere für druckluftüberwachte Fernmeldekabel, bestehend aus zwei Halbschalen aus Kunststoff mit flanschartigen Längsrändern und mit zur Muffenlängsachse normal stehenden Stirnwänden mit mindestens einer Ausnehmung zur Aufnahme mindestens eines Kabeleinführungßstutzens, wobei in einer Dichtungsnut der Halbschalen eine Längsdichtung vorgesehen ist, die sich bis zur Ausnehmung für den Kabeleinführungsstutzen erstreckt und in dieser Ausnehmung eine um das Kabel herumgeführte Ringddichtung angeordnet ist.

Bei einer aus der DE-A- 2 319 956 bekannten Anordnung dieser Art ist die Dichtung als einstückiger Formteil ausgebildet, der zur Abdichtung zwischen dem Kabeleinführungsstutzen und dem Muffenkörper kreisringförmig, vorzugsweise quergeschlitzt, ausgebildet ist und weiterhin dreieckförmige Ansätze aufweist, die in zugeordnete Öffnungen in den Stirnwänden der Muffenhalbschalen passen, wobei ein keilförmiger Teil den Raum zwischen den dreieckförmigen Öffnungen in den Stirnwänden und den freien Trennfugenflächen der Halbschalen verschließt. Diese bekannte Anordnung erfordert somit viele, zum Teil kompliziert geformte Einzelteile, und es ist dabei nachteilig, daß diese einer umständlichen Handhabung bedürfen.

Aus der DE-B-2 334 398 ist es bei einer explosionssicheren Kabeldurchführung durch eine Wand bekannt, ein Dichtungselement in Hülsenform zwischen zwei ineinanderschraubbaren zylindrischen Stutzenteilen anzuordnen, wobei die Dichtungshülse zur zusätzlichen Zugentlastung des Kabels radial einwärts gepreßt wird.

Anordnungen der eingangs genannten Art sind auch aus der DE-A-2 050 536 und DE-A-2 050 537 bekannt, jedoch sind dabei in Dichtungskammern kompliziert aufgebaute, mit ihrer Oberfläche dem Profil dieser Kammern angepaßte Dichtungsblöcke vorgesehen, die mit zwei an ihrem Umfang gegenüberliegenden Verbindungsstegen aus einem Stück bestehen, wobei diese Stege in unter rechtem Winkel daran angesetzte, schräg abgeschnittene Profilschnuransätze auslaufen. In die an beiden Halbschalen vorgesehenen Nuten sind dann gesondert Profilschnurdichtungen einzulegen, und zwar ebenfalls unter Ausbildung von Schrägschnitten. Damit liegt auch hier ein System vor, das viele komplex gebaute Einzelteile und umständliche Manipulationen bei unter Umständen gefährdeter Dichtheit aufweist, bedingt durch die vier vorhandenen Schrägschnittstöße zwischen den Ansätzen und den Profilschnüren.

Aus der CH-C-549 300 ist ein Behälter zum Anschließen von Fernmeldekabeln bekannt, dessen Gehäuse gegen den Deckel durch eine Dichtung abgedichtet ist, die in einer umlaufenden Nut des Deckels eingesetzt ist.

Aus der FR-A-1 147 778 ist eine längsgeteilte Muffe ohne Stirnwände und Kabeleinführungsstutzen bekannt, bei der zur Abdichtung eine einstückige Dichtung vorgesehen ist, die eine zwischen flanschartigen Längsrändern der Halbschalen der Muffe angeordnete Längsdichtungen und zwei an den Enden der Muffe angeordnete und in Nuten eingreifende, um das Kabel herumgeführte Ringdichtungen aufweist. Da bei dieser bekannten Muffe keine Mittel vorgesehen sind, die Ringdichtungen gegen das Kabel zu pressen, ergeben sich insbesondere im Bereich der Muffenenden Abdichtungsprobleme.

Die US-A-2 771 502 zeigt und beschreibt bei einer Muffe Ringdichtungen, die axial komprimierbar sind. Da die Muffe gemäß der US-A-2 771 502 keine Stirnwände aufweist, ist ein erheblicher konstruktiver Aufwand nötig, um die Ringdichtungen zu komprimieren. Überdies besitzt die Muffe der US-A-2 771 502 keinen Kabeleinführungsstutzen, so daß Teile des Kabelmantels im Bereich der Ringdichtungen geklemmt werden müssen, um eine Zugentlastung zu erreichen.

Die Erfindung stellt sich die Aufgabe, eine einfache Formteile aufweisende und einfach herstellbare und sich im Betrieb robust und wirksam erweisende Muffe der eingangs genannten Art zu schaffen, bei der auch das Problem der druckdichten Ausführung sowohl der Kabeleinführung als auch der Halbschalen der Muffe gegeneinander gelöst ist.

Diese Aufgabe wird erfindungsgemäß bei einer Muffe der eingangs genannten Gattung dadurch gelöst, daß die Ringdichtung zwischen einer Endstirnfläche des Kabeleinführungsstutzens und einer im Muffeninnenraum angeordneten Gegenscheibe eingespannt und durch Spannschrauben komprimierbar ist. Auf diese Weise wird bei einfacher Handhabung der benötigten, leicht herstellbaren Einzelteile nicht nur beim Zusammenbau, sondern auch bei späteren Wartungsarbeiten eine besonders wirksame Abdichtung des Muffeninnenraumes erzielt. Insbesondere läßt die erfindungsgemäße Ausbildung der Kabeleinführung mit der Ringdichtung den dichtenden Anschluß an die Längsdichtung (-dichtungen) zu. Beim Spannen (Komprimieren) der Ringdichtung wird dann gleichzeitig der Anschluß abgedichtet. Außerdem kann die Endstirnfläche des Kabeleinführungsstutzens als Endflansch Teil eines dichtenden Anschlußstückes sein.

Um die erfindungsgemäße Muffe auch für extremste Temperaturbereiche, z.B. von -60 bis +110°C, insbesondere für druckluftüberwachte Kabel, ohne Druckabfall betriebssicher zu machen, sieht ein weiteres Merkmal der Erfindung vor, daß die Ringdichtung einstückig ausgebildet ist und im Bereich der Längsdichtung mit vorzugsweise kegelstumpfförmigen Ansätzen versehen ist, die Ausnehmungen aufweisen, welche die Längsdichtungen aufnehmen. Es hat sich gezeigt, daß auf diese Weise eine höchst zuverlässige Dichtung der Halbschalen, sowohl bei extremen Temperaturen als auch Betriebsdrücken im Inneren der Muffe bei druckgasüberwachten Fernmeldekabeln erreicht wird.

Weitere Merkmale und Einzelheiten sowie Vorteile der Erfindung ergeben sich aus der folgenden Beschreibung zweier beispielhafter Ausführungsformen anhand der Zeichnungen; darin zeigen

Figur 1 eine Seitenansicht einer aus zwei Halbschalen bestehenden Muffe nach einem ersten Beispiel,

Figur 2 eine Draufsicht auf ein Ende der unteren Halbschale,

Figur 3 eine Untersicht des zugeordneten Endes der oberen Halbschale,

Figur 4 eine Ansicht der Stirnwand der Muffe,

Figur 5 einen vertikalen, vergrößerten Schnitt nach der Linie V-V der Figur 4,

Figur 6 einen Längsschnitt durch die Kabeleinführung an einem Ende der Muffe, wobei zur Vereinfachung der Darstellung eine vertikale Schnittebene für die Muffe und eine horizontale Schnittebene für die Kabelführung gewählt wurde,

Figur 7 einen Vertikallängsschnitt durch die eigentliche Kabeleinführung in die Muffe nach einem zweiten Beispiel, ähnlich Figur 6, wobei die Ringdichtung zum Teil in Seitenansicht dargestellt ist,

Figur 8 eine teilweise Draufsicht auf die Ringdichtung mit eingesteckter Längsdichtung und

Figur 9 einen Querschnitt durch eine Längsdichtung.

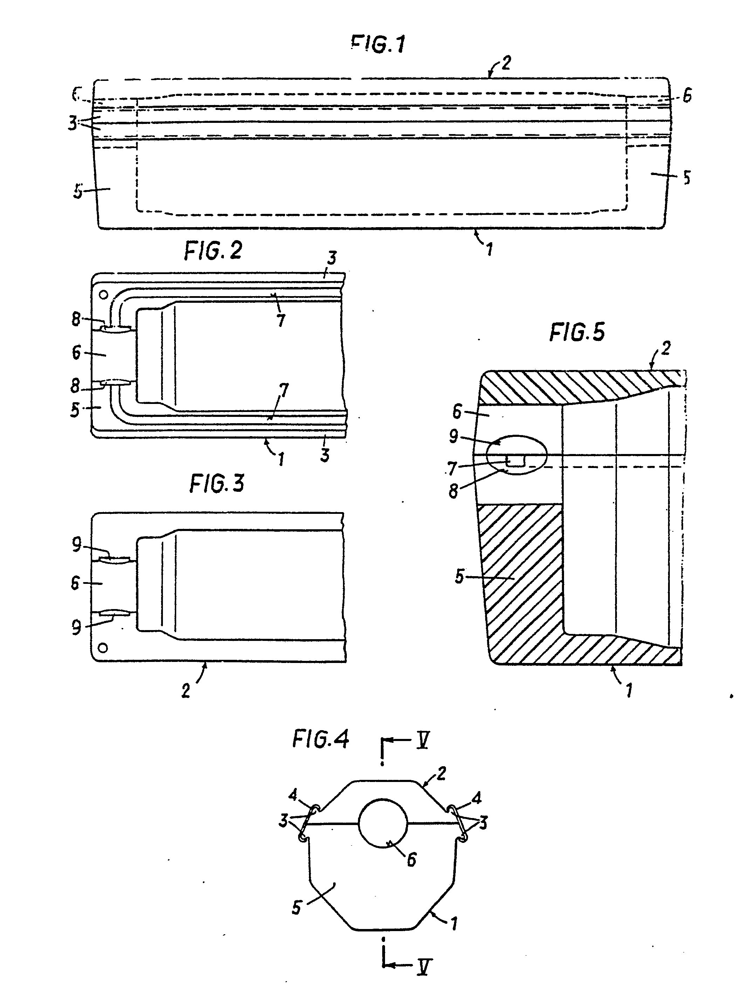

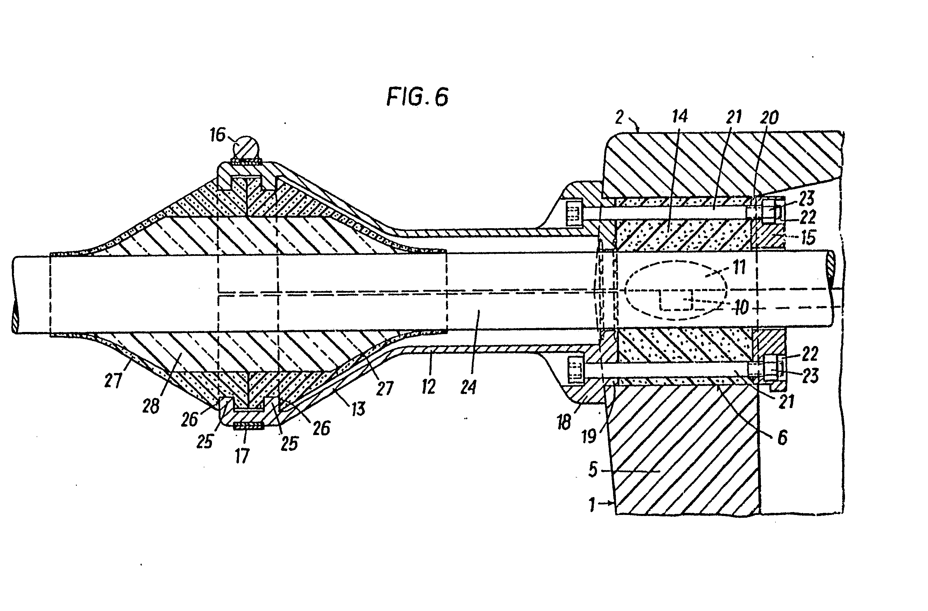

Wie aus den Figuren 1 bis 5 hervorgeht, besteht die einen achteckigen Umriß aufweisende Muffe aus zwei Halbschalen 1 und 2, die entlang ihrer Längsseiten mit flanschartigen Längsrändern 3 versehen sind und durch über diese schiebbare Profilschienen 4 (Figur 4) in üblicher Weise miteinander verbunden werden können. Jede Halbschale 1 und 2 weist endseitig eine Stirnwand 5 auf, die eine halbzylindrische Ausnehmung 6 für die Kabeleinführung besitzt. Wie aus Figur 2 ersichtlich, verlaufen entlang der horizontalen Flanschinnenseiten der unteren Halbschale 1 Dichtungsnuten 7, die sich bis zur Ausnehmung 6 hin erstrecken und mit einer verbreiterten Aussparung 8 in diese übergehen. Die obere Halbschale 2 besitzt keine Dichtungsnuten, weist aber verbreiterte Aussparungen 9 auf. Auf diese Weise lassen sich als Formteile ausgebildete Längsdichtungen 10 (Figur 6) in die Dichtungsnuten 7 einlegen, wobei jede Längsdichtung 10, nach ihrer Umbiegung in den Stirnwänden 5, in einer scheibenartigen Verbreiterung 11 an jedem Ende ausläuft, die in die Aussparungen 8 und 9 der Halbschalen 1 und 2 passen.

Einzelheiten der Kabeleinführung sind in Figur 6 dargestellt. Wie ersichtlich, besteht diese aus einem Kabeleinführungsstutzen 12 mit einer trichterartigen Erweiterung 13, einer Ringdichtung 14, die in der Ausnehmung 6 in den Stirnwänden 5 der Halbschalen 1 und 2 aufgenommen ist, und einer Gegenscheibe 15. Der Kabeleinführungsstutzen 12 ist, wie die Ringdichtung 14 und die Gegenscheibe 15, in einer Vertikalebene längsgeteilt, und seine beiden Hälften werden durch einen mittels einer Schraube 16 spannbaren Ring 17 zusammengehalten. Das andere Ende des Kabeleinführungsstutzens 12 bildet einen Endflansch 18, der sich an die Außenseite der Stirnwände 5 der Halbschalen 1 und 2 anlegt, wobei ein vom Endflansch 18 abstehender Kragen 19 in die Ausnehmung 6 ragt. Die Gegenscheibe 15 ist ebenfalls mit einem solchen Kragen 20 versehen.

Im Endflansch 18 sind Spannschrauben 21 gelagert, die sich parallel zur Längsachse der Muffe durch die Ringdichtung 14 und die Gegenscheibe 15 hindurch erstrecken, wobei in Aussparungen 22 der Gegenscheibe 15 Muttern 23 für die Spannschrauben 21 aufgenommen sind. Damit kann die Ringdichtung 14 in axialer Richtung komprimiert werden, so daß sie sich dichtend an das Kabel 24, an die Ausnehmung 6 und an die darin endenden Verbreiterungen 11 der Längsdichtungen 10 anlegt.

Mit Vorteil sind, wie erwähnt, die Ringdichtung 14, der Kabeleinführungsstutzen 12 und die Gegenscheibe 15, in einer Vertikalebene längsgeteilt. Die Teilungsebene steht somit senkrecht zur Berührungsebene der Halbschalen 1 und 2. Aus Gründen der vereinfachten Darstellung ist die vertikale Teilungsebene in Figur 6 jedoch horizontal liegend dargestellt.

Die Erweiterung 13 des Kabeleinführungsstutzens 12 weist innen zwei vorspringende ringförmige Rippen 25 auf, die in Nuten 26 von konischen Führungseinsätzen 27 eingreifen. Die Enden dieser Führungseinsätze 27 legen sich in bekannter Weise an den Mantel des Kabels 24 an und bilden für dieses eine Zug- bzw. Druckentlastung. Für gwöhnlich ist der freie Raum zwischen dem Kabelmantel und den Führungseinsätzen 27 mit einer Ausschäumung 28 versehen.

Die Teile der Muffe bestehen aus einem thermoplastischen Kunststoff, insbesondere Polyurethan, ausgenommen die metallischen Profilschienen 4 zum Zusammenspannen der Halbschalen 1 und 2. Die Längsdichtung 10 und die Ringdichtung 14 bestehen aus einem gummielastischen Werkstoff, z.B. aus Silikongummi.

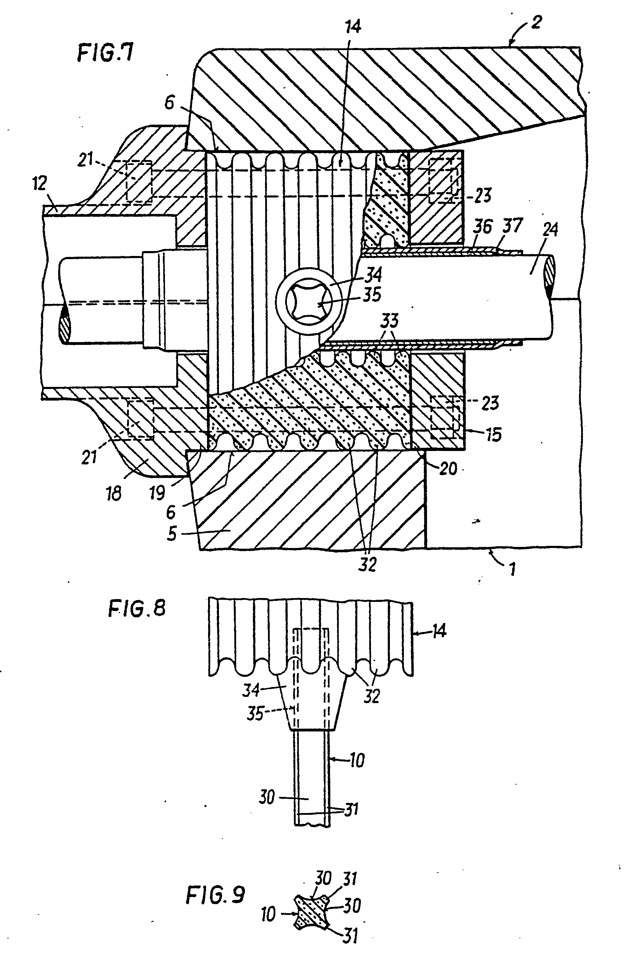

Die in Figur 7 gezeigte Muffe besteht ebenfalls aus zwei Halbschalen 1 und 2, über deren (nicht dargestellte) flanschartige Längsränder Profilschienen 4 schiebbar sind. In der Stirnwand 5 jeder Halbschale 1, 2 ist eine halbzylindrische Ausnehmung 6 für die Kabeleinführung ausgebildet. In die Dichtungsnuten 7 der Flanschinnenseiten der unteren Halbschalen 1 werden die Längsdichtungen 10 eingelegt, so wie dies in den Figuren 2 und 3 gezeigt ist. Die Längsdichtungen 10 bestehen aus einem elastischen Kunststoff und weisen den Querschnitt eines Quadrates auf, dessen Seiten 30 nach innen eingezogen sind, so daß Kanten in Form von Dichtlippen 31 gebildet werden (Figur 9), die sich an die zugeordneten Dichtflächen an den Flanschinnenseiten anlegen.

Auch bei dieser Ausführungsform besteht, wie beim ersten Ausführungsbeispiel, die längsgeteilte Kabeleinführung aus einem Kabeleinführungsstutzen 12, einer hier einstückig ausgebildeten Ringdichtung 14, die in der Ausnehmung 6 der Stirnwände 5 der Halbschalen 1 und 2 aufgenommen ist, und einer längsgeteilten Gegenscheibe 15 (Figur 7). Der Kabeleinführungsstutzen 12 besitzt, wie beim ersten Ausführungsbeispiel, einen Endflansch 18, der sich an die Außenseite der Stirnwände 5 anlegt. Der Kragen 19 des Endflansches 18 und der Kragen 20 der Gegenscheibe 15 ragen in die Ausnehmung 6. Im Endflansch 18 sind (strichliert dargestellt) Spannschrauben 21 gelagert, die sich durch die Ringdichtung 14 und die Gegenscheibe 15 erstrecken und mit Muttern 23 versehen sind, um die Ringdichtung 14 axial zusammendrücken zu können.

Die Ringdichtung 14 ist hier, an ihrer zylindrischen Außenseite und an ihrer zylindrischen Innenseite, mit parallel zueinander und in Umfangsrichtung verlaufenden Rippen 32 und 33 versehen. Die Zahl und die Tiefe der äußeren Rippen 32 ist größer als die der inneren Rippen 33. So wird zwischen der Ausnehmung 6 und dem Mantel des Kabels 24 sowie den Rippen 32 bzw. 33 eine Anzahl von Ringkammern gebildet, die beim Anziehen der Spannschrauben 21 mittels der Muttern 23 unter Druck gesetzt werden und durch das Anlegen der Rippenaußenseiten an die zylindrischen Teile der Ausnehmung 6 bzw. des Mantels des Kabels 24 eine zuverlässige Abdichtung bewirken. Es hat sich als vorteilhaft erwiesen, wenn bei einer axialen Länge der Ringdichtung 14 von 60 mm z.B. außen sieben Rippen 32 mit einer Tiefe von 5 mm und innen fünf Rippen 33 mit einer Tiefe von 3 mm vorgesehen sind.

Zur Herstellung eines besonders dichten Anschlusses der Längsdichtungen 10 an die Ringdichtung 14 weist diese in ihrer Mittelebene angeordnet und einander diametral gegenüberliegend zwei kegelstumpfförmige Ansätze 34 auf, die von den äußeren Rippen 32 ausgehen. Jeder Ansatz 34 weist eine Ausnehmung 35 auf, deren Querschnitt dem der Längsdichtung 10 entspricht. Somit lassen sich die Enden der Längsdichtungen 10 in die Ausnehmungen 35 einstecken, wodurch beim Anziehen der Spannschrauben 21 eine gute Abdichtung erzielt wird.

Beim in Figur 7 gezeigten Ausführungsbeispiel ist zur weiteren Erhöhung der Dichtheit längs des Mantels des Kabels 24 auf diesen im Bereich der inneren Rippen 33 eine Hülse 36 aus Metall, vorzugsweise aus Messing, aufgeschoben, die ihrerseits von einem Schlauchfolienstück 37 in Stellung gehalten wird. Das Schlauchfolienstück 37 ist auf die Hülse 36 aufgeschrumpft, d.h. es weist zunächst einen größeren Durchmesser als die Metallhülse 36 auf und legt sich nach dem Aufschieben auf die Hülse 36 unter Wärmeeinwirkung an die Hülse 36 und den Kabelmantel an.

Im Rahmen der Erfindung sind Abänderungen der beschriebenen Ausführungsbeispiele möglich. So können die Dichtungsnuten 7 auch an der oberen Halbschale 2 ausgebildet sein.

Eine Anpassung an verschiedene Kabeldurchmesser ist durch Wahl einer entsprechenden Bohrung am Endflansch 18 des Kabeleinführungsstutzens 12 leicht möglich. Der Kabeleinführungsstutzen 12 kann auch aus Metall bestehen.

Die Ringdichtung 14 kann auch aus einem nur einen Längsschlitz aufweisenden Formstück bestehen.

Die Ringdichtung 14 kann auch als hohler Zylinder ausgebildet sein, durch den dann das Kabelende einfädelbar ist und der aber im Bedarfsfalle mit einem oder zwei, in einer Radialebene liegenden Längsschnitten durchtrennbar ist, um das Einlegen des Kabels 24 zu erleichtern. Schließlich ist es auch möglich, die beiden Längsdichtungen 10 mit ihren scheibenartigen Verbreiterungen 11 zusammen mit der Ringdichtung 14 als ein einziges Formstück auszubilden.

Zur Sicherung des Zusammenhaltens der Teile der Kabeleinführung bei abgenommenem Ring 17 ist es von Vorteil, wenn die Gegenscheibe 15 nicht in einer Vertikalebene, sondern in einer Horizontalebene längsgeteilt ist.

Als besonders günstig hat es sich erwiesen, wenn die Teilungsebene der Halbschalen 1 und 2, die zusammengesetzt eine Muffe mit achteckigem Querschnitt ergeben, so gelegt ist, daß die obere Halbschale 2 einen 3/8-Umfang und die untere Halbschale 1 einen 5/8-Umfang aufweist, wie dies in Figur 4 gezeigt ist. Die so ausgebildete Kunststoffmuffe vermag Innendrücken standzuhalten, die weit über den für druckluftüberwachte Garnituren vorgeschriebenen Berstdrücken liegen.

Die Spannschrauben 21 können auch so angeordnet sein, daß sie neben der (und nicht durch die) Ringdichtung 12 verlaufen. In diesem Fall werden die Durchmesser des Endflansches 18 am Kabeleinführungsstutzen 12 und der Gegenscheibe 15 größer als dargestellt zu bemessen sein.

Die Erfindung ist auch für die Abdichtung von Muffen, die in den Stirnwänden mehr als eine Kabeleinführung aufweisen, und für solche Muffen geeignet, bei welchen eine der beiden Stirnwände geschlossen ausgebildet ist, also keine Kabeleinführung aufweist.

Als Werkstoff für die Ringdichtung und die Längsdichtungen (Quadring) wird beim zweiten Beispiel bevorzugt ein Athylen-Propylen-Tetrapolymer (EPDM) verwendet. Der Kabelmantel ist üblicherweise aus Polyäthylen oder Polyvinylchlorid hergestellt. Der Querschnitt der Längsdichtungen 10 kann z.B. auch kreisrund sein. Ihm entspricht dann der Querschnitt der Ausnehmungen 35 in den Ansätzen 34 an der Ringdichtung 14. Mit Vorteil sind hier die Spannschrauben 21 über den Körper der Ringdichtung 14 verteilt.

**Patentansprüche**

1. Längsgeteilte, druckfeste Muffe, insbesondere für druckluftüberwachte Fernmeldekabel, bestehend aus zwei Halbschalen (1, 2) aus Kunststoff mit flanschartigen Längsrändern (3) und mit zur Muffenlängsachse normal stehenden Stirnwänden (5) mit mindestens einer Ausnehmung (6) zur Aufnahme mindestens eines Kabeleinführungsstutzens (12), wobei in einer Dichtungsnut (7) der Halbschalen (1, 2) eine Längsdichtung (10) vorgesehen ist, die sich bis zur Ausnehmung (6) für den Kabeleinführungsstutzen erstreckt und in dieser Ausnehmung (6) eine um das Kabel (24) herumgeführte Ringdichtung (14) angeordnet ist, dadurch gekennzeichnet, daß die Ringdichtung (14) zwischen einer Endstirnfläche des Kabeleinführungsstutzens (12) und einer im Muffeninnenraum angeordneten Gegenscheibe (15) eingespannt und durch Spannschrauben (21) komprimierbar ist.

2. Muffe nach Anspruch 1, dadurch gekennzeichnet, daß die Ringdichtung (14) ebenso wie der Kabeleinführungsstutzen (12) und die Gegenscheibe (15) längsgeteilt ist, wobei die Teilungsebene dieser Teile, vorzugsweise unter rechtem Winkel, zur Berührungsebene der Flanschinnenseite der Halbschalen (1, 2) versetzt ist.

3. Muffe nach einem der Ansprüche 1 oder 2, dadurch gekennzeichnet, daß die Enden der in der Dichtungsnut (7) der einen Halbschale (1) liegenden Längsdichtung (10) scheibenartige Verbreiterungen (11) aufweisen, die sich an den Außenmantel der Ringdichtung (14) anlegen, und daß die Halbschalen (1, 2) entsprechend geformte Aussparungen (8, 9) zur Aufnahme dieser Verbreiterungen (11) besitzen (Fig. 6).

4. Muffe nach einem der Ansprüche 1 bis 3, dadurch gekennzeichnet, daß die Endstirnflächen des Kabeleinführungsstutzens (12) bzw. sein Endflansch (18) einen Kragen (19) aufweist, der in die Ausnehmung (6) in den Stirnwänden (5) der Halbschalen (1, 2) hineinragt, wobei vorzugsweise ein solcher Kragen (20) auch an der Gegenscheibe (15) angeordnet ist.

5. Muffe nach einem der Ansprüche 1 bis 4, dadurch gekennzeichnet, daß im Anschluß an die Endstirnfläche des Kabeleinführungsstutzens (12) dieser als Kabeleinführung rohrartig ausgebildet und an seinem freien Endteil mit einer trichterartigen Erweiterung (13) versehen ist, wobei vorzugsweise die Innenseite dieser Erweiterung (13) vorspringende Rippen (25) aufweist, in denen zur Zug- bzw. Druckentlastung des Kabels (24) konische Führungseinsätze (27) gelagert sind.

6. Muffe nach Anspruch 5, dadurch gekennzeichnet, daß der freie Raum zwischen den Führungseinsätzen (27) und dem Kabel (24) mit einer Ausschäumung (28) versehen ist.

7. Muffe nach einem der Ansprüche 1 bis 6, dadurch gekennzeichnet, daß die durch die beiden Halbschalen (1, 2) gebildete Muffe im Querschnitt einen achteckigen Umriß aufweist, wobei die horizontale Teilungsebene der Halbschalen (1, 2) so gelegt ist, daß die obere Halbschale (2) einen 3/8-Umfang und die untere Halbschale (1) einen 5/8-Umfang aufweist.

8. Muffe nach Anspruch 1, dadurch gekennzeichnet, daß die Ringdichtung (14) einstückig ausgebildet ist und im Bereich der Längsdichtung (10) mit vorzugsweise kegelstumpfförmigen Ansätzen (34) versehen ist, die Ausnehmungen (35) aufweisen, welche die Längsdichtungen (10) aufnehmen (Fig. 8).

9. Muffe nach einem der Ansprüch 1 bis 8, dadurch gekennzeichnet, daß im Bereich der Innenseite der Ringdichtung (14) eine Metallhülse (36), vorzugsweise aus Messing, auf den Mantel des Kabels (24) aufgeschoben ist (Fig. 7).

10. Muffe nach Anspruch 9, dadurch gekennzeichnet, daß die Metallhülse (36) durch ein über sie aufschrumpfbares Schlauchfolienstück (37) gehalten ist.

**Claims**

1. A longitudinally divided, pressure-resistant coupling sleeve, in particular for compressed air-monitored telecommunication cables, comprising two half-shells (1, 2) of plastics material with flange-like longitudinal edges (3) and with end walls (5) which are disposed normal to the longitudinal axis of the sleeve, with at least one opening (6) for accommodating at least one cable inlet connection (12), wherein provided in a sealing groove (7) in the half-shells (1, 2) is a longitudinal seal (10) which extends to the opening (6) for the cable inlet connection and disposed in said opening (6) is an annular seal (14) which passes around the cable (24), characterised in that the annular seal (14) is gripped between an end face of the cable inlet connection (12) and a co-operating disc member (15) which is disposed in the interior of the sleeve, and can be compressed by clamping screws (21).

2. A sleeve according to claim 1 characterised in that the annular seal (14), like the cable inlet connection (12) and the co-operating disc member (15), is longitudinally divided, wherein the plane in which said components are divided is displaced, preferably at a right angle, to the plane of contact of the inward sides of the flanges of the half-shells (1, 2).

3. A sleeve according to one of claims 1 or 2 characterised in that the ends of the longitudinal seal (10) which is disposed in the sealing groove (7) in the one half-shell (1) have portions (11) which are enlarged in width in a disc-like configuration and which bear against the outside surface of the annular seal (14), and that the half-shells (1, 2) have correspondingly shaped recesses (8, 9) for accommodating said enlarged portions (11) (Figure 6).

4. A sleeve according to one of claims 1 to 3 characterised in that the end faces of the cable inlet connection (12) or its end flange (18) has a collar (19) which extends into the opening (6) in the end walls (5) of the half-shells (1, 2), wherein preferably such a collar (20) is also arranged on the co-operating disc member (15).

5. A sleeve according to one of claims 1 to 4 characterised in that adjoining the end face of the cable inlet connection (12), said connection is of a tubular configuration, as a cable inlet, and is provided at its free end portion with a funnel-like enlargement (13), wherein preferably the inward side of said enlargement (13) has projecting ribs (25) in which conical guide inserts (27) are mounted for relieving tensile and compression loadings on the cable (24).

6. A sleeve according to claim 5 characterised in that the free space between the guide inserts (27) and the cable (24) is provided with a foam filling (28).

7. A sleeve according to one of claims 1 to 6 characterised in that the sleeve which is formed by the two half-shells (1, 2) is of octagonal configuration in cross-section, wherein the horizontal plane in which the half-shells (1, 2) are divided is so disposed that the upper half-shell (2) provides 3/8ths of the periphery and the lower half-shell (1) provides 5/8ths of the periphery.

8. A sleeve according to claim 1 characterised in that the annular seal (14) is of a one-piece construction and is provided in the region of the longitudinal seal (10) with preferably frustoconical extension portions (34) having recesses (35) which accommodate the longitudinal seals (10) (Figure 8).

9. A sleeve according to one of claims 1 to 8 characterised in that in the region of the inward side of the annular seal (14), a metal sleeve member (36), preferably of brass, is pushed on to the casing of the cable (24) (Figure 7).

10. A sleeve according to claim 9 characterised in that the metal sleeve member (36) is held by a tubular foil portion (37) which can be shrunk over same.

**Revendications**

1.- Manchon de câble, fendu longitudinalement, à l'épreuve de la pression, en particulier pour des câbles de communication à distance surveillés à l'air comprimé, comprenant deux demi-coques (1,2) de matière synthétique, avec des bords longitudinaux (3) du genre de brides et avec des parois frontales (5) perpendiculaires à l'axe longitudinal du manchon, avec au moins un logement (6) pour recevoir au moins une tubulure (12) d'introduction de câble, où une garniture d'étanchéité longitudinale (10) est prévue dans une rainure de garniture d'étanchéité (7) des demi-coques (1, 2), cette garniture s'étendant jusqu'au logement (6) pour la tubulure d'introduction de câble et où une garniture d'étanchéité annulaire (14) est disposée dans ce logement (6) en entourant le câble (24), caractérisé en ce que la garniture d'étanchéité annulaire (14) est serrée entre une surface frontale d'extrémité de la tubulure (12) d'introduction de câble et un plateau antagoniste (15) disposé dans l'espace intérieur du manchon, et est compressible au moyen de vis de serrage (21).

2.- Manchon suivant la revendication 1, caractérisé en ce que la garniture d'étanchéité annulaire (14), ainsi que la tubulure (12) d'introduction de câble et le plateau antagoniste (15) sont divisés longitudinalement, le plan de division de ces parties étant décalé de préférence d'un angle droit par rapport au plan de contact de la face intérieure de bride des demi-coques (1, 2).

3.- Manchon suivant l'une des revendications 1 ou 2, caractérisé en ce que les extrémités de la garniture d'étanchéité longitudinale (10) se trouvant dans la rainure de garniture d'étanchéité (7) d'une des demi-coques (1) présentent des élargissements (11) en forme de plateaux qui s'appliquent à la surface latérale extérieure de la garniture d'étanchéité (14) et en ce que les demi-coques (1,2) comportent des évidements (8,9) de forme convenable pour recevoir ces élargissements (11) (figure 6).

4.- Manchon suivant l'une des revendications 1 à 3, caractérisé en ce que les surfaces frontales d'extrémité de la tubulure (12) d'introduction de câble, respectivement sa bride d'extrémité (18),portent un collet (19) qui pénètre dans le logement (6) dans les parois frontales (5) des demi-coques (1,2), un tel collet (20) étant de préférence arrangé aussi pour le plateau antagoniste (15).

5.- Manchon suivant l'une des revendications 1 à 4, caractérisé en ce qu'au raccordement à la surface frontale d'extrémité de la tubulure (12) d'introduction de câble, cette tubulure est conformée à la façon d'un tube comme introduction de câble et est pourvue, dans sa partie d'extrémité libre, d'un élargissement (13) en forme d'entonnoir, le côté intérieur de cet élargissement (13) présentant de préférence des nervures saillantes (25) dans lesquelles sont montées des garnitures de guidage (27) coniques, pour décharger les efforts de traction, respectivement de compression, du câble (24).

6.- Manchon suivant la revendication 5, caractérisé en ce que l'espace libre entre les garnitures de guidage (27) et le câble (24) est pourvu d'une garniture de mousse (28).

7.- Manchon suivant l'une des revendications 1 à 6, caractérisé en ce que le manchon formé par les deux demi-coques (1, 2) présente en section transversale un contour octogonal, le plan de division horizontal des deux demi-coques (1, 2) étant placé de telle sorte que la demi-coque supérieure (2) ait un pourtour de 3/8 et la demi-coque inférieure (1), un pourtour de 5/8.

8.- Manchon suivant la revendication 1, caractérisé en ce que la garniture d'étanchéité annulaire (14) est faite d'une pièce et est pourvue, dans la région de la garniture d'étanchéité longitudinale (10), de prolongements (34) de préférence en forme de troncs de cône, qui présentent des logements (35) qui reçoivent les garnitures d'étanchéité longitudinales (10) (figure 8).

9.- Manchon suivant l'une des revendications 1 à 8, caractérisé en ce que, dans la région du côté intérieur de la garniture d'étanchéité annulaire (14), est enfilée, sur la surface latérale du câble (24), une gaine métallique (36) de préférence en laiton (figure 7).

10.- Manchon suivant la revendication 9, caractérisé en ce que la gaine métallique (36) est maintenue par un morceau (37) de feuille de tuyau souple pouvant se contracter sur elle.

0 073 748

FIG.1

FIG.2

FIG.3

FIG.5

FIG.4

1

FIG. 6

FIG.7

FIG.8

FIG.9